# EUROPEAN PATENT APPLICATION

(11) **EP 4 621 879 A1**
(43) Date of publication of application: **24.09.2025**
(21) Application number: 24901749.2
(22) Date of filing: 28.06.2024
(51) Int. Cl.: H01M 4/50

(54) **POSITIVE ELECTRODE SHEET MATERIAL, POSITIVE ELECTRODE SHEET, AND BATTERY**

(30) Priority: 04.02.2024 CN 202410157530
(71) Applicant: Eve Energy Co., Ltd., Huizhou, Guangdong 516006 (CN)
(72) Inventor: RONG, Mengke, Huizhou, Guangdong 516006 (CN); TAN, Yaning, Huizhou, Guangdong 516006 (CN); SUN, Peiling, Huizhou, Guangdong 516006 (CN); CAO, Lang, Huizhou, Guangdong 516006 (CN)
(74) Representative: Berggren Oy
(86) International application number: PCT/CN2024/102423
(87) International publication number: WO 2025/161255

(57) **Abstract**

A positive electrode sheet material, a positive electrode sheet, and a battery are provided. The positive electrode sheet material includes a positive active material, a conductive agent, and a binder. The positive active material includes manganese dioxide having a specific surface area in a range of 10 g/cm² to 26 g/cm². The conductive agent includes a first conductive agent having a specific surface area in a range of 10 g/cm² to 60 g/cm².

## Description

This application claims priority to Chinese Patent Application No. 202410157530.0 filed on Feb. 4, 2024, the entire contents of which are incorporated herein by reference.

### TECHNICAL FIELD

The present disclosure relates to the field of batteries, and more particularly, to a positive electrode sheet material, a positive electrode sheet, and a battery.

### BACKGROUND

At present, commercial lithium-manganese dioxide batteries have poor electrochemical performance after high-temperature (>85°C) storage, and thus cannot meet the needs of some scenarios. To improve the electrical performance of the batteries after high-temperature storage, researchers have studied processes for preparing positive electrodes, electrolytes, and the like.

### SUMMARY

However, the batteries still have problems such as large weight loss rate, severe swelling, and sharp increase in internal resistance after higher temperature (e.g., 100° C) storage. Therefore, the batteries cannot satisfy the requirements of the product application due to poor high-temperature storage stability.

The present disclosure provides a positive electrode sheet material including a positive active material, a conductive agent, and a binder. The positive active material includes manganese dioxide having a specific surface area in a range of 10 g/cm² to 26 g/cm². The conductive agent includes a first conductive agent having a specific surface area in a range of 10 g/cm² to 60 g/cm².

The present disclosure also provides a positive electrode sheet. The positive electrode sheet includes a positive current collector, and a positive electrode sheet material coated on the positive current collector.

The present disclosure also provides a battery. The battery includes a housing and an electrolyte, a negative electrode sheet, a separator, and a positive electrode sheet located within the housing.

### BENEFICIAL EFFECT

The present disclosure provides a positive electrode sheet material, a positive electrode sheet, and a battery. In the positive electrode sheet material of the present disclosure, manganese dioxide with a low specific surface area is used as a positive active material. The specific surface area of the positive active material manganese dioxide is low, so that its catalytic activity in high-temperature storage is low, side reactions in an electrolyte can be suppressed, gas generation is reduced, and swelling after high-temperature storage of the battery is avoided. As a result, high-temperature storage stability of the battery can be effectively improved.

### BRIEF DESCRIPTION OF THE DRAWINGS

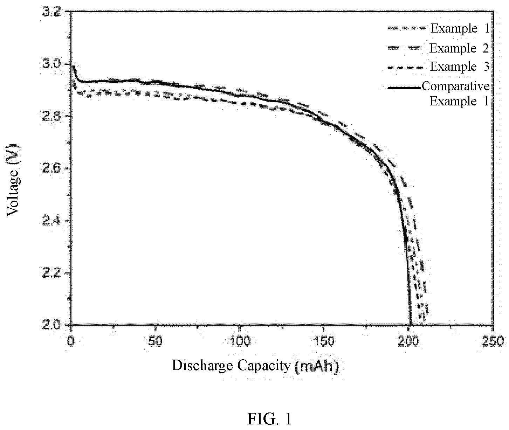

FIG. 1 is a graph of a discharge capacity of a battery according to the present disclosure.

### DETAILED DESCRIPTION

The present disclosure provides a positive electrode sheet material including a positive active material, a conductive agent, and a binder. The positive active material includes manganese dioxide having a specific surface area of 10 g/cm² to 26 g/cm²; The conductive agent includes a first conductive agent having a specific surface area of 10 g/cm² to 60 g/cm².

The manganese dioxide, as the positive active material of a battery, has physical and chemical properties that may greatly affect the electrical properties of the battery. The properties of manganese dioxide such as the specific surface area can provide more active sites in the battery during the discharge process, thereby improving the discharge capacity of the battery. The manganese dioxide itself has an inhere catalytic activity, and when the manganese dioxide having a large specific surface area is used, it may provide more active sites, so that a lithium salt of the electrolyte in the battery is catalyzed to give a secondary reaction and generate gas in a high-temperature environment, thereby causing swelling of the battery and affecting the electrical performance of the battery. To solve the above problems, the manganese dioxide having a low specific surface area (for example, 10 g/cm² to 26 g/cm²) is used as the positive active material in the positive electrode sheet material of the battery according to the present disclosure. When the specific surface area of the positive active material manganese dioxide is low, the manganese dioxide may have a low catalytic activity in high-temperature storage, so that the secondary reaction in the organic solvent and the lithium salt of the electrolyte can be suppressed, gas generation is reduced, and swelling of the battery in high-temperature storage is avoided. Therefore, the battery can maintain the original electrical performance of the battery after high-temperature storage, and the high-temperature storage stability of the battery can be effectively improved.

In the positive electrode sheet material according to the present disclosure, a mass ratio of the positive active material, the conductive agent and the binder is (85 to 90): (5 to 10): (5 to 10). That is, on basis of a total mass percentage of 100% of the positive electrode sheet material, a mass percentage of the positive active material is 85% to 90%, a mass percentage of the conductive agent is 5% to 10%, and a mass percentage of the binder is 5% to 10%. When each component content of the positive electrode sheet material is within the above range, the prepared battery has good high temperature storage stability.

In some embodiments, the conductive agent of the present disclosure further includes a second conductive agent having a specific surface area of 350 g/cm² to 600 g/cm².

To improve the high-temperature storage stability of the battery, the manganese dioxide having a low specific-surface area is used in the positive electrode sheet material in the present disclosure. Compared with the manganese dioxide having a large specific surface area (for example, 28 g/cm² to 38 g/cm²) commonly used in the related art, a decrease in the specific surface area of the manganese dioxide may have an influence on high-current pulse performance of the battery. To improve the high-temperature storage stability and reduce the influence on the high-current pulse performance of the battery, the second conductive agent having a large specific surface area is added in the conductive agent of the positive electrode sheet material in the present embodiment to improve the high-current pulse capability of the battery.

The conductive agent in some embodiments includes the first conductive agent and the second conductive agent. The first conductive agent has a specific surface area in a range of 10 g/cm² to 60 g/cm². The first conductive agent may be one or more of conductive graphite, conductive carbon black, and acetylene black. The second conductive agent has a specific surface area in a range of 350 g/cm² to 600 g/cm². The second conductive agent may be one or more of Ketjen black, graphene, and carbon nanotubes. When the specific surface area of the first conductive agent and the specific surface area of the second conductive agent are in the above ranges, the prepared battery may have a desired high current pulse performance. When the specific surface area of the first conductive agent and the specific surface area of the second conductive agent are lower or higher than the above ranges, the process difficulty increases, and even the battery performance decreases.

In the embodiments, the manganese dioxide having a low specific surface area is used as the positive active material, and the second conductive agent having a large specific surface area is added in the positive electrode sheet material, so that the high-temperature storage stability of the battery is improved while the high-current pulse performance of the battery is not affected, thereby effectively improving the performance of the battery.

According to the present disclosure, a mass ratio of the first conductive agent to the second conductive agent in the conductive agent is (4.5 to 9.9): (0.1 to 0.5). That is, on basis of the total mass percentage of 100% of the positive electrode sheet material, the mass percentage of the positive active material is 85% to 90%, the mass percentage of the first conductive agent is 4.5% to 9.9%, the mass percentage of the second conductive agent is 0.1% to 0.5%, and the mass percentage of the binder is 5% to 10%. When the amount of the second conductive agent is within the above-mentioned range, the high current pulse performance of the battery can be effectively improved, the influence on the stability of the battery is low, and the overall performance of the battery is better.

According to the conductive agent in the present disclosure, the first conductive agent as a conventional conductive agent may include one or two or more components. For example, the first conductive agent may include conductive carbon black (or acetylene black) and conductive graphite in a mass ratio of (1 to 3): (3.5 to 6.9). In other embodiments, the second conductive agent, as the conductive agent having the large specific surface area, may include one or two or more components, which can be designed according to the process and performance requirements of the battery.

The binder of the present disclosure may be one or more of polytetrafluoroethylene, polyacrylic acid, and polyacrylate. The binder is used to increase the binding properties of the positive electrode sheet material.

The present disclosure also provides a positive electrode sheet including a positive current collector and the positive electrode sheet material coated on the positive current collector.

The positive electrode sheet material includes the positive active material, the conductive agent, and the binder. The positive active material includes manganese dioxide having a specific surface area in the range of 10 g/cm² to 26 g/cm². The conductive agent includes the first conductive agent having a specific surface area in a range of 10 g/cm² to 60 g/cm².

The positive current collector may be made of a metal such as aluminum or copper, which is not limited thereto.

The positive electrode sheet is prepared by coating a mixture slurry formed of the positive electrode sheet material on the surface(s) of the positive current collector, followed by drying and rolling.

In some embodiments, the positive electrode sheet may be a film layer formed of the positive electrode sheet material.

The present disclosure also provides a battery including a housing and an electrolyte, a negative electrode sheet, a separator, and the positive electrode sheet located within the housing.

The positive electrode sheet includes the positive current collector and the positive electrode sheet material coated on the positive current collector. The positive electrode sheet material includes the positive active material, the conductive agent, and the binder. The positive active material includes the manganese dioxide having a specific surface area in the range of 10 g/cm² to 26 g/cm². The conductive agent includes the first conductive agent having a specific surface area in a range of 10 g/cm² to 60 g/cm².

The housing includes a housing body and a bottom cover. An accommodating cavity is formed by the housing body surrounding the bottom cover. The negative electrode sheet, the separator, and the positive electrode sheet are stacked in the accommodating cavity in sequence. The housing may be made of a metal such as steel, aluminum, or the like.

The negative electrode sheet includes a negative electrode sheet material including a lithium-containing metal or a lithium-containing compound. For example, the negative electrode sheet may be a metal lithium, a lithium alloy, or the like. Alternatively, the negative electrode sheet may be composed of a negative current collector and a negative electrode sheet material coated on the negative current collector.

The electrolyte is filled in the accommodating cavity. The electrolyte may be an organic electrolyte system such as, but not limited to, lithium perchlorate + propylene carbonate (PC) + dimethoxyethane (DME) + 1,3-dioxolane (DOL).

In the present disclosure, the battery may be a lithium-manganese dioxide battery, such as, but not limited to, a CR2032 lithium-manganese dioxide button battery.

The electrode material, the positive electrode sheet, and the battery of the present disclosure will be described in the following examples.

### Experimental procedure:

### 1. Preparation of batteries

1). The positive active material, the conductive agent, and the binder were mixed to prepare a positive material slurry. The positive material slurry was uniformly coated onto a positive current collector, and dried and rolled to obtain the positive electrode sheet.
2). The negative electrode sheet, the separator, and the positive electrode sheet were stacked in sequence in the housing, and the bottom cover was mounted. The electrolyte was injected into the housing to obtain the CR2032 battery.

The positive active material may be, but not limited to, electrolytic manganese dioxide post high-temperature heat treatment, with the specific surface area of 10 g/cm² to 26 g/cm². The conductive agent may be one or more of conductive graphite, conductive carbon black, acetylene black, Ketjen black, graphene, and carbon nanotubes. The binder may be one or more of polytetrafluoroethylene, polyacrylic acid, and polyacrylate. The negative electrode sheet may be, but not limited to, lithium metal. The electrolyte may be, but not limited to, a lithium perchlorate + propylene carbonate (PC) + dimethoxyethane (DME) + 1,3-dioxolane (DOL) system.

### Example 1

The positive electrode sheet material includes manganese dioxide, conductive carbon black, conductive graphite, and the binder.

The manganese dioxide has a specific surface area of 10 g/cm².

The conductive carbon black and the conductive graphite have a specific surface area of 10 g/cm² to 60 g/cm², respectively.

The mass ratio of the manganese dioxide, the conductive carbon black, the conductive graphite, and the binder is 86: 3: 4: 7.

The positive electrode sheet material of Example 1 is used to prepare the CR2032 battery according to the preparation method of the battery.

### Example 2

The positive electrode sheet material includes manganese dioxide, conductive carbon black, conductive graphite, and the binder.

The manganese dioxide has a specific surface area of 15.5 g/cm².

The conductive carbon black and the conductive graphite have a specific surface area of 10 g/cm² to 60 g/cm², respectively.

The mass ratio of the manganese dioxide, the conductive carbon black, the conductive graphite, and the binder is 86: 3: 4: 7.

The positive electrode sheet material. of Example 2 is used to prepare the CR2032 battery according to the preparation method of the battery.

### Example 3

The positive electrode sheet material includes manganese dioxide, conductive carbon black, conductive graphite, and the binder.

The manganese dioxide has a specific surface area of 20.3 g/cm².

The conductive carbon black and the conductive graphite have a specific surface area of 10 g/cm² to 60 g/cm², respectively.

The mass ratio of the manganese dioxide, the conductive carbon black, the conductive graphite, and the binder is 86: 3: 4: 7.

The positive electrode sheet material of Example 3 is used to prepare the CR2032 battery according to the preparation method of the battery.

### Example 4

The positive electrode sheet material includes manganese dioxide, conductive carbon black, and the binder.

The manganese dioxide has a specific surface area of 10 g/cm².

The conductive carbon black has a specific surface area of 10 g/cm² to 60 g/cm².

The mass ratio of the manganese dioxide, the conductive carbon black, and the binder is 86: 7: 7.

The positive electrode sheet material of Example 4 is used to prepare the CR2032 battery according to the preparation method of the battery.

### Example 5

The positive electrode sheet material includes manganese dioxide, conductive carbon black, graphene, and the binder.

The manganese dioxide has a specific surface area of 10 g/cm².

The conductive carbon black has a specific surface area of 10 g/cm² to 60 g/cm² and the graphene has a specific surface area of 500 g/cm² to 600 g/cm².

The mass ratio of the manganese dioxide, the conductive carbon black, the graphene, and the binder is 86: 6.9: 0.1: 7.

The positive electrode sheet material of Example 5 is used to prepare the CR2032 battery according to the preparation method of the battery.

### Comparative Example 1

The positive electrode sheet material includes manganese dioxide, conductive carbon black, conductive graphite, and the binder.

The manganese dioxide has a specific surface area of 32 g/cm².

The conductive carbon black and the conductive graphite have a specific surface area of 10 g/cm² to 60 g/cm², respectively.

The mass ratio of the manganese dioxide, the conductive carbon black, the conductive graphite, and the binder is 86: 3: 4: 7.

The positive electrode sheet material of Comparative Example 1 is used to prepare the CR2032 battery according to the preparation method of the battery.

### Comparative Example 2

The positive electrode sheet material includes manganese dioxide, conductive carbon black, graphene, and the binder.

The manganese dioxide has a specific surface area of 10 g/cm²; and the graphene has a specific surface area of >600 g/cm².

The mass ratio of the manganese dioxide, the conductive carbon black, the graphene, and the binder is 86: 6.9: 0.1: 7.

The compositions in Comparative Example 2 are the same as that in Example 5. However, since the specific surface area of the graphene (second conductive agent) used in Comparative Example 2 is larger than 600 g/cm², it was difficult to form a film of the positive electrode sheet material and to form the positive electrode sheet, so that subsequent battery preparation steps could not be performed.

It is to be noted that the binders in the above Examples 1 to 5 and Comparative Examples 1 and 2 may be polytetrafluoroethylene.

### 2. High temperature storage experiment

The CR2032 batteries prepared in Examples 1 to 5 and Comparative Example 1 were stored at 100°C for 80 days. Then, the pulse load capacity of the CR2032 batteries was evaluated at room temperature with a pulse current of 15 mA, and the change in height of the CR2032 batteries was determined as the swelling of the batteries during storage. The pulse load voltage, weight loss rate and expansion rate of the batteries before and after storage at 100 °C were measured. Results are shown in Table 1.

**Table 1 The pulse load voltage, weight loss rate and expansion rate of the batteries before and after storage at 100 °C**

| | Fresh Batteries | Batteries Stored at 100°C for 80 days | | |
|---|---|---|---|---|
| | Pulse Load Voltage (V) | Pulse Load Voltage (V) | Weight Loss Rate (%) | Expansion Rate (%) |
| Example 1 | 2.8774 | 2.3884 | 0.03% | 0.01% |
| Example 2 | 2.8786 | 2.4721 | 0.02% | 0.03% |
| Example 3 | 2.8883 | 2.4068 | 0.025% | 0.10% |
| Example 4 | 2.8906 | 2.7493 | 0.015% | 0.05% |
| Example 5 | 2.9283 | 2.8385 | 0.01% | 0.09% |
| Comparative Example 1 | 2.8914 | 1.7120 | 0.35% | 0.30% |

Here, the term "fresh batteries" in Table 1 refers to batteries before storage at 100°C.

The results from Examples 1 to 4 and Comparative Example 1 show that the batteries in Examples 1 to 4 are prepared using the manganese dioxide having a low specific surface area and the battery in Comparative Example 1 is prepared using a conventional manganese dioxide having a large specific surface area. In Table 1, a loss amount of the pulse load voltage, the weight loss rate, and the expansion rate of the batteries in Examples 1 to 4 after storage at 100°C for 80 days were lower than those of the battery in Example 1 after storage at 100°C for 80 days, indicating that the stability of the battery at high temperature can be improved when the manganese dioxide with a low specific surface area is used as the positive active material.

The results from Examples 1 to 3 and Comparative Example 1 show that the pulse load voltage at high current of the fresh battery in Comparative Example 1 is higher than that in Examples 1 to 3, indicating that the low specific surface area of the manganese dioxide affects the high current pulse capacity of the battery to some extent. The reason may be that the active sites are reduced during discharge because the manganese dioxide having a low specific surface area is used, resulting in the reduction of the high current pulse capacity, and in turn the reduction of the load voltage of the battery.

The results from Examples 4 and 5 show that when the second conductive agent having a large specific surface area is not added in Example 4, while the second conductive agent (graphene) having a large specific surface area is added in Example 5, the pulse load voltage at a large current in Example 5 is higher than that in Example 4, indicating that the manganese dioxide having a low specific surface area combined with the conductive agent having a large specific surface area can improve the high current pulse performance of the battery.

In summary, the results of Examples 1 to 5 and Comparative Example 1 show that the batteries prepared from the positive electrode sheet materials including the manganese dioxide having a low specific surface area of the present disclosure can improve the high-temperature storage stability thereof. According to the present disclosure, the batteries prepared from the positive electrode sheet material including the manganese dioxide having a low specific surface area and the second conductive agent having a large specific surface area can improve high-current pulse performance while improving high-temperature storage stability of the battery.

### 3. Discharge capacity

FIG. 1 is a schematic view showing the discharge capacity (mAh) versus voltage (V) in Examples 1 to 3 and Comparative Example 1. As can be seen from FIG. 1, the variation trend of the discharge capacity in Examples 1 to 3 is similar to that in Comparative Example 1, indicating that the use of the manganese dioxide having a low specific surface area as the positive active material has little influence on the discharge capacity of the battery and has little influence on the capacity development rate of the manganese dioxide.

The present disclosure provides the positive electrode sheet material, the positive electrode sheet, and the battery. The positive electrode sheet material of the present disclosure includes the manganese dioxide having a low specific surface area as the positive active material, so as to improve electrical performance after high-temperature storage of the battery. Furthermore, the second conductive agent with a large specific surface area is added to the positive electrode sheet material, so as to improve a high-current pulse loading capacity of the battery. According to the present disclosure, the combination of the manganese dioxide with a low specific surface area and the conductive agent with a large specific surface area can effectively improve high-temperature storage stability and high current pulse performance of the battery.

## Claims

1. A positive electrode sheet material comprising a positive active material, a conductive agent, and a binder,
wherein the positive active material comprises manganese dioxide having a specific surface area in the range of 10 g/cm² to 26 g/cm²; and
the conductive agent comprises a first conductive agent having a specific surface area in a range of 10 g/cm² to 60 g/cm².

2. The positive electrode sheet material according to claim 1, wherein a mass ratio of the positive active material, the conductive agent, and the binder is (85 to 90): (5 to 10): (5 to 10).

3. The positive electrode sheet material according to claim 2, wherein the conductive agent further comprises a second conductive agent having a specific surface area in a range of 350 g/cm² to 600 g/cm².

4. The positive electrode sheet material according to claim 3, wherein a mass ratio of the first conductive agent to the second conductive agent in the conductive agent is (4.5 to 9.9): (0.1 to 0.5).

5. The positive electrode sheet material according to any one of claims 1 to 4, wherein the first conductive agent comprises one or more of conductive graphite, conductive carbon black, and acetylene black.

6. The positive electrode sheet material according to any one of claims 3 to 4, wherein the second conductive agent comprises one or more of Ketjen black, graphene, and carbon nanotubes.

7. The positive electrode sheet material according to any one of claims 1 to 4, wherein the binder comprises one or more of polytetrafluoroethylene, polyacrylic acid, and polyacrylate.

8. A positive electrode sheet comprising a positive current collector and the positive electrode sheet material according to any one of claims 1 to 7 coated on the positive current collector.

9. A battery comprising a housing and an electrolyte, a negative electrode sheet, a separator, and the positive electrode sheet according to claim 8 disposed within the housing.

10. The battery according to claim 9, wherein the negative electrode sheet comprises a negative electrode sheet material comprising a lithium-containing metal or a lithium-containing compound.

11. The battery according to claim 9 or 10, wherein a pulse load voltage of the battery after storage for 80 days at 100°C is in a range of 2.3884 V to 2.8385 V.

12. The battery according to claim 9 or 10, wherein a weight loss rate of the battery after storage for 80 days at 100°C is in a range of 0.01% to 0.03%.

13. The battery according to claim 9 or 10, wherein an expansion rate of the battery after storage for 80 days at 100°C is in a range of 0.01% to 0.10%.
